(19) Europäisches Patentamt
European Patent Office
Office européen des brevets

(11) EP 1 595 984 B1

(12) **EUROPEAN PATENT SPECIFICATION**

(45) Date of publication and mention of the grant of the patent:
**09.06.2010 Bulletin 2010/23**

(21) Application number: **03768244.0**

(22) Date of filing: **25.12.2003**

(51) Int Cl.:
***D02G 3/04*** *(2006.01)*

(86) International application number:
**PCT/JP2003/016755**

(87) International publication number:
**WO 2004/063441 (29.07.2004 Gazette 2004/31)**

(54) **DIFFERENTIAL-SHRINKAGE POLYESTER COMBINED FILAMENT YARN**

DIFFERENTIAL-SHRINKAGE-FILAMENTGARN IN KOMBINATION MIT POLYESTER

FIL COMPOSE DE FILAMENTS DE POLYESTER A DIFFERENTS COEFFICIENTS DE RETRAIT

(84) Designated Contracting States:
**AT BE BG CH CY CZ DE DK EE ES FI FR GB GR HU IE IT LI LU MC NL PT RO SE SI SK TR**

(30) Priority: **16.01.2003 JP 2003008158**
**16.01.2003 JP 2003008162**
**13.03.2003 JP 2003067840**
**14.03.2003 JP 2003070082**

(43) Date of publication of application:
**16.11.2005 Bulletin 2005/46**

(73) Proprietor: **Teijin Fibers Limited**
**Osaka-shi, Osaka 541-0054 (JP)**

(72) Inventors:
- **MIZUMURA, Tomoo,**
**Teijin Fibers Limited**
**Matsuyama-shi,**
**Ehime 791-8041 (JP)**
- **MIYASAKA, Nobuyoshi**
**Chuo-ku,**
**Osaka-shi,**
**Osaka 541-0054 (JP)**
- **TSUKAMOTO, Ryoji,**
**Teijin Fibers Ltd.**
**Matsuyama-shi,**
**Ehime 791-8041 (JP)**
- **HATTORI, Keijiro**
**Chiyoda-ku,**
**Tokyo 100-0011 (JP)**
- **OSAKA, Hiroyuki,**
**Teijin Fibers Limited**
**Matsuyama-shi,**
**Ehime 791-8041 (JP)**

(74) Representative: **Hallybone, Huw George et al**
**Carpmaels & Ransford**
**43-45 Bloomsbury Square**
**London WC1A 2RA (GB)**

(56) References cited:
**WO-A1-01/00706**
**JP-A- 8 170 248**
**JP-A- 8 209 475**
**JP-A- 10 158 947**
**JP-A- 2000 319 370**
**JP-A- 2001 323 054**
**JP-A- 2002 212 833**

- **DATABASE WPI Section Ch, Week 197920 Thomson Scientific, London, GB; Class A23, AN 1979-37706B XP002491910 "Prodn. of polyester - using as polycondensation catalyst the reaction prod. of a titanium tetra:alkoxide and a phosphoric acid deriv." & JP 54 043295 A (TEIJIN LTD) 5 April 1979 (1979-04-05)**
- **DATABASE WPI Section Ch, Week 199642 Thomson Scientific, London, GB; Class A23, AN 1996-422520 XP002491911 "Combined filaments yarn of polyester with different shrinkages - comprises high and low shrinkage yarns of polyethylene terephthalate! and its copolymer" & JP 08 209475 A (NIPPON ESTER CO LTD) 13 August 1996 (1996-08-13)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 595 984 B1

## Description

### Technical Field

The present invention relates to a polyester different-contraction commingled yarn. More specifically, it relates to a polyester different-contraction commingled yarn produced using polyester polymers with satisfactory color tone and excellent moldability.

### Background Art

Polyester filaments exhibit excellent mechanical, physical and chemical performance and are therefore widely employed for filament uses.
It has been attempted to utilize filaments made of polyester polymers to obtain bulky filaments, and for example, there have been proposed filaments with different shrinkage ratios being disposed as core filaments and sheath filaments (for example, Japanese Unexamined Patent Publication HEI No. 5-209366).
The constituent polymers of the polyester filaments, for example polyethylene terephthalate, are usually produced by first preparing an ethylene glycol ester of terephthalic acid and/or a lower polymer thereof and then heating it under reduced pressure in the presence of a polymerization catalyst for reaction to the desired degree of polymerization. Other polyesters are produced by similar processes.
It is known that the type of polycondensation catalyst used has a major effect on the quality of the resulting polyester, and antimony compounds are most widely used as polycondensation catalysts for polyethylene terephthalate.
A problem is associated with the use of antimony compounds, however, because prolonged continuous melt spinning of polyesters results in accumulated adhesion of foreign matter around the spinneret hole (hereinafter referred to simply as "spinneret adhesion" and redirection of the molten polymer flow (bending), which ultimately lead to fluff and filament breakage or mottling of the physical properties of the filament during the spinning and drawing steps.
As means of solving these problems, there have been disclosed the use of the reaction products of titanium compounds and trimellitic acid as polyester production catalysts (for example, see Japanese Examined Patent Publication SHO No. 59-46258) and the use of the reaction products of titanium compounds and phosphorous acid esters as polyester production catalysts (for example, see Japanese Unexamined Patent Publication SHO No. 58-38722). While these methods do enhance the molten heat stability of polyesters to some degree, the enhancing effect is inadequate and the obtained polyester polymers are in need of color tone improvement.
There have also been proposed titanium compound/phosphorus compound complexes as polyester production catalysts (for example, see Japanese Unexamined Patent Publication HEI No. 7-138354). However, although this method enhances the molten heat stability to some degree, the effect is inadequate and the obtained polyesters are in need of color tone improvement.
Different-contraction commingled yarns are used especially for luxury clothing and are therefore required to exhibit high quality and color tone.

### Disclosure of the Invention

It is a first object of the invention to solve the aforementioned problems of the prior art by providing polyester different-contraction commingled yarn having satisfactory color tone, no fluff and high quality. This object is achieved by the following polyester different-contraction commingled yarn.
The polyester different-contraction commingled yarn of the invention is a commingled yarn comprising two different types of filaments with different boiling water shrinkage ratios, comprising a polyester polymer as the princhipal component individually,
wherein
the polyester polymer is one produced by polycondensation of an aromatic dicarboxylate ester in the presence of a catalyst,
the catalyst comprises at least one ingredient selected from among mixture (1) and reaction product (2) below,
mixture (1) is a mixture of the following components (A) and (B):

(A) a titanium compound component comprising at least one compound selected from the group consisting of:

(a) titanium alkoxides represented by the following general formula (I):

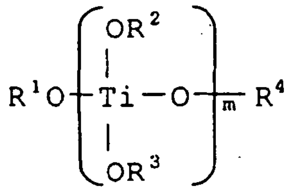

(I)

[wherein $R^1$, $R^2$, $R^3$ and $R^4$ each independently represent one species selected from among alkyl groups having 1 to 20 carbon atoms and phenyl groups, m represents an integer of 1-4, and when m is an integer of 2, 3 or 4, the two, three or four $R^2$ and $R^3$ groups may be the same or different], and

(b) reaction products of titanium alkoxides of general formula (I) above with aromatic polyvalent carboxylic acids represented by the following general formula (II):

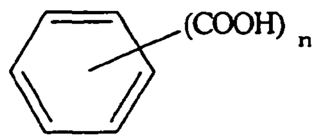

(II)

[wherein n represents an integer of 2-4] or their anhydrides, and

(B) a phosphorus compound component comprising at least one compound represented by the following general formula (III):

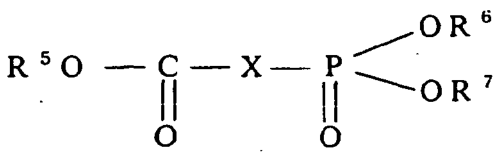

(III)

[wherein $R^5$, $R^6$ and $R^7$ each independently represent alkyl groups having 1 to 4 carbon atoms, and X represents at least one species selected from among $-CH_2-$ group and $-CH_2(Y)$ group(where Y represents phenyl group)], the catalyst mixture (1) is used with a mixing ratio such that the ratio (%) $M_{Ti}$ of the millimoles of titanium element in the titanium compound component (A) with respect to the number of moles of the aromatic dicarboxylate ester and the ratio (%) $M_p$ of the millimoles of phosphorus element in the phosphorus compound component (B) with respect to the number of moles of the aromatic dicarboxylate ester satisfy the following expressions (i) and (ii):

$$1 \leq M_p/M_{Ti} \leq 15 \qquad (i)$$

$$10 \leq M_p+M_{Ti} \leq 100 \qquad (ii),$$

and reaction product (2) is the reaction product of the following components (C) and (D):

(C) a titanium compound component comprising at least one compound selected from the group consisting of:

(c) titanium alkoxides represented by formula (I) above and

(d) reaction products of titanium alkoxides of general formula (I) above with aromatic polyvalent carboxylic acids represented by general formula (II) above or their anhydrides, and

(D) a phosphorus compound component comprising at least one phosphorus compound represented by the following general formula (IV):

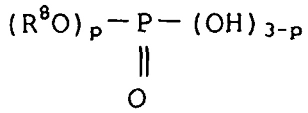

(IV)

wherein $R^8$ represents alkyl groups having 1 to 20 carbon atoms or aryl group having 6 to 20 carbon atoms, and p represents an integer of 1 and the filaments with a low boiling water shrinkage ratio (low-shrinkage filaments) are filaments taken up at a take-up speed of 2000-4000 m/min in melt spinning and subjected to relaxation heat treatment.

Component (A) of the mixture (1) for the catalyst and component (C) of the reaction product (2) for the catalyst in the polyester different-contraction commingled yarn of the invention preferably contain the respective titanium alkoxide (a) and titanium alkoxide (c) each in a reaction molar ratio in the range of 2:1 to 2:5 with respect to the aromatic polyvalent carboxylic acid represented by general formula (II) or its anhydride.

In the reaction product (2) for the catalyst of the polyester different-contraction commingled yarn of the invention, the reaction ratio of component (D) with respect to component (C) is preferably in the range of 1:1 to 3:1, in terms of the ratio of the moles of phosphorus atoms in component (D) to the moles of titanium atoms in component (C) (P/Ti).

The phosphorus compound of general formula (IV) used in the reaction product (2) for the catalyst in the polyester different-contraction commingled yarn of the invention is preferably selected from among monoalkyl phosphates.

The aromatic dicarboxylate ester in the polyester different-contraction commingled yarn of the invention is preferably a diester produced by transesterification of an aromatic dicarboxylic acid dialkyl ester and an alkylene glycol, in the presence of a titanium compound-containing catalyst.

The aromatic dicarboxylic acid in the polyester different-contraction commingled yarn of the invention is preferably selected from among terephthalic acid, 1,2-naphthalenedicarboxylic acid, phthalic acid, isophthalic acid, diphenyldicarboxylic acid and diphenoxyethanedicarboxylic acid, and the alkylene glycol is preferably selected from among ethylene glycol, butylene glycol, trimethylene glycol, propylene glycol, neopentyl glycol, hexanemethylene glycol and dodecanemethylene glycol.

It is a second object of the invention to provide, in addition to the first object, polyester different-contraction commingled yarn having excellent bulk and a wool-like feel. This object is achieved by the following polyester different-contraction commingled yarn.

Specifically, this is polyester different-contraction commingled yarn comprising as the principal component a polyester polymer produced by polycondensation in the presence of the aforementioned specific catalyst, wherein the two different types of filaments are a polyester partially oriented yarn with a boiling water shrinkage ratio of no greater than 5% and a polyester filament with a boiling water shrinkage ratio of 8% or greater.

It is a third object of the invention to provide, in addition to the first object, polyester commingled yarn which gives cloth with a luxurious worsted feel and an excellent stretch feel and non-glitter effect. This object is achieved by the following polyester different-contraction commingled yarn.

Specifically, this is polyester different-contraction commingled yarn comprising as the principal component a polyester polymer produced by polycondensation in the presence of the aforementioned specific catalyst, wherein both of the filaments are latent crimping conjugated filaments of two different polyesters conjugated in a side-by-side fashion or eccentric core-sheath fashion, the shrinkage ratio of the low-shrinkage filaments is 0.5-8.0% and the boiling water shrinkage ratio of the high-shrinkage filaments is at least 10%.

In the polyester different-contraction commingled yarn described above, the crimp ratio of the high-shrinkage filaments after boiling water treatment is preferably at least 1.5%.

In the polyester different-contraction commingled yarn described above, the low-shrinkage filaments are filaments taken up at a taking-up speed of 2000-4000 m/min in melt spinning and objected to relaxation heat treatment.

Also in the polyester different-contraction commingled yarn described above, preferably the filament size of the high-shrinkage filaments are larger than that of the low-shrinkage filaments, with the single filament sizes of the low-shrinkage filaments and high-shrinkage filaments being 0.05-3.5 dtex and 0.55-15.0 dtex, respectively, and the size difference between them being 0.5 dtex or greater.

Best Mode for Carrying Out the Invention

It is an essential feature of the polyester different-contraction commingled yarn of the invention that it is composed of two filaments with different boiling water shrinkage ratios both comprising a polyester polymer as their main component, and that the polyester polymer is one produced by polycondensation of an aromatic dicarboxylate ester in the presence of the specific catalyst described hereunder. This makes it possible to obtain different-contraction commingled yarn having satisfactory color tone, no fluff and high quality. The difference in boiling water shrinkage ratios between the two different filaments is preferably 2% or greater, more preferably 5-50% and even more preferably 5-30%. As explained hereunder, the two different filaments may both be conjugated filaments made of two different polymers, in order to make the commingled yarn of the invention comprising the polyester polymer as the main component in a stable manner to produce high quality commingled yarn which generates no fluff or the like, thus exhibiting a notable effect.

The polycondensation catalyst comprises at least one selected from among (1) mixtures of the titanium compound component (A) and phosphorus compound component (B) described below and (2) reaction products of the titanium compound component (C) and phosphorus compound component (D) described below.

The titanium compound (A) of the polycondensation catalyst mixture (1) is comprised at least one compound selected from the group consisting of:

(a) titanium alkoxides represented by the following general formula (I):

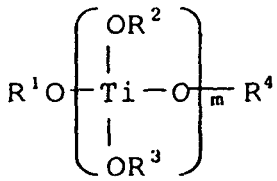

(I)

[wherein $R^1$, $R^2$, $R^3$ and $R^4$ each independently represent one species selected from among alkyl groups having 1 to 20 carbon atoms, preferably 1 to 6 carbon atoms and phenyl groups, m represents an integer of 1-4 and preferably 2-4, and when m is an integer of 2, 3 or 4, the two, three or four $R^2$ and $R^3$ groups may be the same or different], and

(b) reaction products of titanium alkoxides of general formula (I) above with aromatic polyvalent carboxylic acids represented by the following general formula (II):

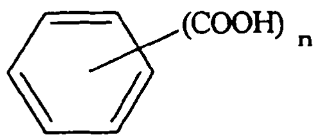

(II)

[wherein n represents an integer of 2-4 and preferably 3-4]
or their anhydrides.

The phosphorus compound (B) of the polycondensation catalyst mixture (1) is comprised at least one compound represented by the following general formula (III):

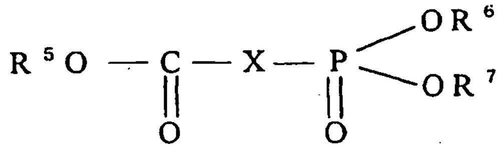

(III)

[wherein $R^5$, $R^6$ and $R^7$ each independently represent alkyl group having 1 to carbon atoms, and X represents at least one species selected from among $-CH_2-$ group and $-CH_2(Y)$ group(where Y represents phenyl)].

The reaction product (2) for a polycondensation catalyst is the reaction product of a titanium compound component (C) and phosphorus compound component (D).

The titanium compound component (C) is comprised at least one compound selected from the group consisting of:

(c) titanium alkoxides represented by formula (I) above and

(d) reaction products of titanium alkoxides of general formula (I) above with aromatic polyvalent carboxylic acids represented by general formula (II) above or their anhydrides.

The phosphorus compound component (D) is comprised at least one phosphorus compound represented by the following general formula (IV):

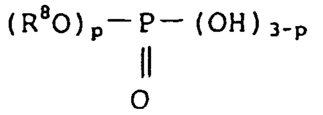

(IV)

wherein $R^8$ represents alkyl group having 1 to 20 carbon atoms or aryl group carbon 6 to 20 carbon atoms, and p represents an integer of 1.

When a mixture (1) of the titanium compound component (A) and the phosphorus compound component (B) is used as the polycondensation catalyst, the titanium alkoxide (a) represented by general formula (I) or the reaction product (b) of the titanium alkoxide (a) and the aromatic carboxylic acid represented by general formula (II) or its anhydride, used as the titanium compound component (A), have high solubility and compatibility for polyester polymers, and therefore even if residue of the titanium compound component (A) remains in the polyester polymer produced by polycondensation, there is no accumulation of foreign matter around the spinneret during melt spinning, so that a polyester filament of satisfactory quality can be produced with high spinning efficiency.

As titanium alkoxides (a) represented by general formula (I) to be used in the polycondensation catalyst titanium compound component (A) or (C) according to the invention, there are preferred tetraisopropoxytitanium, tetrapropoxytitanium, tetra-n-butoxytitanium, tetraethoxytitanium, tetraphenoxytitanium, octaalkyl trititanate and hexaalkyl dititanate.

The aromatic polyvalent carboxylic acid of general formula (II) or its anhydride which is reacted with the titanium alkoxide (a) or (c) is preferably selected from among phthalic acid, trimellitic acid, hemimellitic acid, pyromellitic acid, and their anhydrides. In particular, using trimellitic anhydride will yield a reaction product exhibiting high affinity for the polyester polymer, and is effective for preventing accumulation of foreign matter.

When the titanium alkoxide (a) or (c) for the titanium compound component (A) or (C) is reacted with the aromatic polyvalent carboxylic acid of general formula (II) or its anhydride, it is preferred, for example, to dissolve the aromatic polyvalent carboxylic acid or its anhydride in a solvent, add the titanium alkoxide (a) or (c) dropwise to the solution and heat the mixture for at least 30 minutes at a temperature of 0-200°C. The solvent used in this case is preferably selected as desired from among ethanol, ethylene glycol, trimethylene glycol, tetramethylene glycol, benzene and xylene.

There is no particular restriction on the molar ratio for reaction between the titanium alkoxide (a) or (c) with the aromatic polyvalent carboxylic acid of general formula (II) or its anhydride, but if the proportion of the titanium alkoxide is too high, the color tone of the resulting polyester may be impaired or the softening point may be lowered, whereas if the proportion of the titanium alkoxide is too low, the polycondensation reaction may be impeded. The molar ratio for the reaction between the titanium alkoxide (a) or (c) with the aromatic polyvalent carboxylic acid of general formula (II) or its anhydride is therefore preferably in the range of (2:1) to (2:5).

The reaction product (b) or (d) obtained by the reaction may be used directly, or it may be used after purification by recrystallization with acetone, methyl alcohol and/or ethyl acetate.

The phosphorus compound (phosphonate compound) of general formula (III) to be used for a phosphorus compound component (B) of the polycondensation catalyst mixture (1) according to the invention is preferably selected from among dimethyl esters, diethyl esters, dipropyl esters and dibutyl esters of phosphonic acid derivatives such as carbomethoxymethane-phosphonic acid, carboethoxymethanephosphonic acid, carbopropoxymethanephosphonic acid, carbobutoxymethanephosphonic acid, carbomethoxyphenylmethanephosphonic acid, carboethoxyphenylmethanephosphonic acid, carbopropoxyphenyl-methanephosphonic acid, carbobutoxyphenylmethanephosphonic acid, and the like.

When a phosphorus compound component (B) composed of a phosphorus compound (phosphonate compound) of general formula (III) is used for polycondensation reaction of the aromatic dicarboxylate ester, the reaction with the titanium compound component (A) proceeds more moderately as compared to phosphorus compounds ordinarily used as reaction stabilizers, and therefore the catalytically active life of the titanium compound component (A) during the polycondensation reaction process is longer and as a result, a smaller proportion of the titanium compound component (A) may be used with respect to the amount of the aromatic dicarboxylate ester in the polycondensation reaction system. Also, even if a large amount of stabilizer is added to the polycondensation reaction system containing a phosphorus

compound component (B) composed of a phosphorus compound of general formula (III), there is no reduction in thermal stability of the obtained polyester polymer and its color tone is also satisfactory.

When the mixture (1) is used as the polycondensation catalyst according to the invention, the mixture (1) is used with a mixing ratio such that the ratio (%) $M_{Ti}$ of the millimoles of titanium element in the titanium compound component (A) with respect to the number of moles of the aromatic dicarboxylate ester and the ratio (%) $M_p$ of the millimoles of phosphorus element in the phosphorus compound component (B) with respect to the number of moles of the aromatic dicarboxylate ester satisfy the following relational expressions (i) and (ii) :

$$1 \leq M_p/M_{Ti} \leq 15 \qquad (i)$$

$$10 \leq M_p+M_{Ti} \leq 100 \qquad (ii).$$

The ratio $M_p/M_{Ti}$ is between 1 and 15, and preferably between 2 and 10. If the ratio $M_p/M_{Ti}$ is less than 1, the color tone of the obtained polyester polymer may be yellowish, while if it is greater than 15, the polycondensation reactivity of the polycondensation catalyst of such a composition will be insufficient, making it difficult to obtain the intended polyester polymer. The range for the ratio $M_p/M_{Ti}$ according to the invention is relatively narrow compared to that for conventional Ti-P catalysts, but establishing such a range produces an excellent effect which has not been obtained with conventional Ti-P catalysts.

The value of the sum ($M_p+M_{Ti}$) is between 10 and 100, and preferably between 20 and 70. If the value of ($M_p+M_{Ti}$) is less than 10, the filament forming property of the obtain polyester polymer, the production efficiency in the melt spinning process and the performance of the obtained filaments will be inadequate. If the value of ($M_p+M_{Ti}$) is greater than 100, a small but significant degree of foreign matter accumulation will occur around the spinneret when the obtained polyester polymer is used for melt spinning. The value of $M_{Ti}$ is generally preferred to be 2-15 and more preferably 3-10.

When the reaction product (2) is used as a polycondensation catalyst according to the invention, the phosphorus compound of general formula (IV) used as the phosphorus compound (D) may be, for example, a monoalkyl phosphate such as mono-n-butyl phosphate, monohexyl phosphate, monododecyl phosphate, monolauryl phosphate or monooleyl phosphate; a monoaryl phosphate such as monophenyl phosphate, monobenzyl phosphate, mono(4-ethylphenyl) phosphate, monobiphenyl phosphate, mononaphthyl phosphate or monoanthryl phosphate; a dialkyl phosphate such as diethyl phosphate, dipropyl phosphate, dibutyl phosphate, dilauryl phosphate or dioleyl phosphate, or a diaryl phosphate such as diphenyl phosphate. Preferred among these are monoalkyl phosphates or monoaryl phosphates, wherein p in formula (IV) is 1.

The phosphorus compound component (D) used for the invention may be a mixture of two or more phosphorus compounds of general formula (IV), and as examples of preferred combinations there may be mentioned mixtures of monoalkyl phosphates and dialkyl phosphates or mixtures of monophenyl phosphates and diphenyl phosphates. Particularly preferred are compositions wherein a monoalkyl phosphate constitutes at least 50% and especially at least 90% of the mixture based on the total weight of the mixture.

The method of preparing the reaction product of the titanium compound component (C) and phosphorus compound component (D) may involve, for example, combining the components (C) and (D) and heating them in glycol. Specifically, heating a glycol solution containing the titanium compound component (C) and the phosphorus compound component (D) will cause clouding of the glycol solution with precipitation of the components (C) and (D) as reaction products. The precipitate may be collected for use as a catalyst for polyester polymer production.

The glycol used in this case is preferably the same glycol component for the polyester to be produced using the obtained catalyst. For example, ethylene glycol is preferred when the polyester is polyethylene terephthalate, 1,3-propanediol is preferred when it is polytrimethylene terephthalate and tetramethylene glycol is preferred when it is polytetramethylene terephthalate.

The polycondensation reaction product (2) according to the invention may be produced by a method of simultaneously combining the titanium compound component (C) and phosphorus compound (D) and the glycol, and heating them. However, since heating causes the titanium compound component (C) and phosphorus compound component (D) to react and produce a precipitated reaction product which is insoluble in glycol, it is preferred for the reaction up to precipitation to proceed in a uniform manner. In order to efficiently obtain the reaction precipitate, therefore, the preferred production process is one in which separate glycol solutions of the titanium compound component (C) and phosphorus compound component (D) are prepared beforehand, and the solutions are then combined and heated.

The temperature for the reaction between components (C) and (D) is preferably between 50°C and 200°C, and

the reaction time is preferably from 1 minute to 4 hours. If the reaction temperature is too low, the reaction may proceed insufficiently or an excessive reaction time may be required, making it impossible to efficiently obtain a reaction precipitate by uniform reaction.

The mixing proportion of the titanium compound component (C) and phosphorus compound component (D) heated to reaction in glycol is preferably in the range of 1.0 to 3.0 and more preferably 1.5 to 2.5, as the molar ratio of phosphorus atoms with respect to titanium atoms. Within this range, the phosphorus compound component (D) and titanium compound component (C) will react almost completely, in order to avoid the presence of an incomplete reaction product, and therefore the reaction product may be used directly to yield a polyester polymer with a satisfactory color tone. In addition, the virtual lack of excess unreacted phosphorus compound (V) results in high productivity without impeding the polyester polymerization reactivity.

The reaction product (2) for the polycondensation catalyst used for the invention preferably comprises a compound represented by the following general formula (V) :

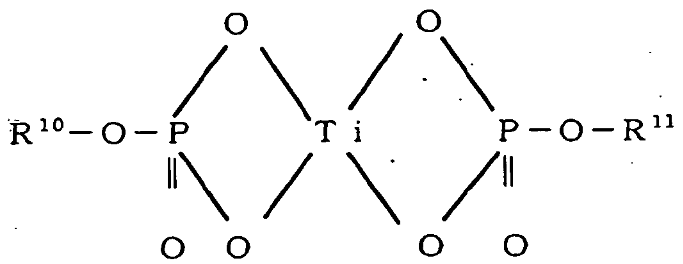

(V)

(wherein $R^{10}$ and $R^{11}$ each independently represent at least one species selected from aryl groups having 6 to 12 carbon atoms derived from $R^1$, $R^2$, $R^3$ and $R^4$ in general formula (I) representing the titanium alkoxide for titanium compound component (C) and $R^8$ in general formula (IV) representing the phosphorus compound for phosphorus compound component (D).

Since the reaction product of the titanium compound and the phosphorus compound (III) or (IV) represented by formula (V) has high catalytic activity, polyester polymers obtained using it have satisfactory color tone (low b value), and exhibit satisfactorily practical polymer performance with a sufficiently low content of acetaldehydes, residual metals and cyclic trimers for practical use. The reaction product represented by formula (V) is preferably present at 50 wt% or greater and more preferably at 70 wt% or greater.

If the aromatic dicarboxylate ester is subjected to polycondensation in the presence of the reaction product (2), it may be used as a polyester production catalyst directly, without separating the glycol and the precipitated reaction product (2) obtained in the aforementioned manner. Also, after the precipitate has been separated from the glycol solution containing the precipitated reaction product (2) by means such as centrifugal precipitation or filtration, the precipitated reaction product (2) may be recrystallized with, for example, acetone, methyl alcohol and/or water for purification and the purified product used as the catalyst. The structure of the catalyst may be confirmed by solid NMR and XMA metal quantitative analysis.

The polyester polymer used for the invention is obtained by polycondensation of an aromatic dicarboxylate ester in the presence of a catalyst comprising the aforementioned mixture (1) of a titanium compound component (A) and phosphorus compound (phosphonate compound) (B) and/or the reaction product (2) of a titanium compound component (C) and a phosphorus compound component (D). According to the invention, the aromatic dicarboxylate ester is preferably a diester comprising an aromatic dicarboxylic acid component and an aliphatic glycol component.

The aromatic dicarboxylic acid is preferably composed mainly of terephthalic acid. More specifically, terephthalic acid preferably constitutes at least 70 mole percent based on the total aromatic dicarboxylic acid component content. As examples of preferred aromatic dicarboxylic acids other than terephthalic acid there may be mentioned phthalic acid, isophthalic acid, naphthalenedicarboxylic acid, diphenyldicarboxylic acid and diphenoxyethanedicarboxylic acid.

The aliphatic glycol component is preferably an alkylene glycol, of which there may be used, for example, ethylene glycol, trimethylene glycol, propylene glycol, tetramethylene glycol, neopentyl glycol, hexanemethylene glycol and dodecamethylene glycol, with ethylene glycol being particularly preferred.

According to the invention, the polyester polymer is preferably a polyester comprising as its main repeating unit ethylene terephthalate composed of terephthalic acid and ethylene glycol. "Main" means that the ethylene terephthalate repeating unit constitutes at least 70 mole percent of the total repeating units in the polyester.

The polyester polymer used for the invention may also be a mixed polyester obtained by copolymerization of polyester components as the acid component or diol component.

As mixed carboxylic acid components there may be used the aforementioned aromatic dicarboxylic acids, of

course, as well difunctional carboxylic acid components including aliphatic dicarboxylic acids such as adipic acid, sebacic acid, azelaic acid and decanedicarboxylic acid and alicyclic dicarboxylic acids such as cyclohexanedicarboxylic acid, or their ester-forming derivatives, as starting materials. As mixed diol components there may be used the aforementioned aliphatic diols, of course, as well as alicyclic glycols such as cyclohexanedimethanol and aromatic diols such as bisphenol, hydroquinone and 2,2-bis(4-β-hydroxyethoxyphenyl)propane, as starting materials.

In addition, there may also be used mixed polyester polymers obtained by copolymerization of polyfunctional compounds such as trimesic acid, trimethylolethane, trimethylolpropane, trimethylolmethane and pentaerythritol as mixed components.

Such polyester polymers and mixed polyester polymers may be used alone or in combinations of two or more.

According to the invention, the polyester polymer used is preferably the polycondensation product of an aromatic dicarboxylate ester composed of an aromatic dicarboxylic acid and aliphatic glycol, as described above. The aromatic dicarboxylate ester may also be produced by diesterification reaction of an aromatic dicarboxylic acid and an aliphatic glycol, or it may be produced by transesterification of an aromatic dicarboxylic acid dialkyl ester and an aliphatic glycol. However, methods involving transesterification using dialkyl esters of aromatic dicarboxylic acids as starting materials are more advantageous than methods of diesterification using aromatic dicarboxylic acids as starting materials, because they produce less debris of the phosphorus compound added as a phosphorous stabilizer during the polycondensation reaction.

Also, all or a portion of the titanium compound component (A) or (C) is preferably added before initiation of the transesterification reaction, for use as a double reaction catalyst, i.e. a transesterification reaction catalyst and polycondensation reaction catalyst. This will allow a reduction in the titanium compound content of the final polyester. More specifically, in the case of polyethylene terephthalate, for example, transesterification reaction between an aromatic dicarboxylic acid dialkyl ester (composed mainly of terephthalic acid) and ethylene glycol is preferably carried out in the presence of the titanium compound component (A) comprising (a) at least one compound selected from the group consisting of titanium alkoxides represented by general formula (I) above and (b) products of reaction between titanium alkoxides of general formula (I) with aromatic polyvalent carboxylic acids represented by general formula (II) above or their anhydrides. A phosphorus compound (phosphonate compound) represented by general formula (III) above, or the reaction product of a titanium compound component (C) and the aforementioned phosphorus compound component (D), is preferably further added to the reaction mixture comprising the diester of the aromatic dicarboxylic acid and ethylene glycol obtained by the transesterification reaction, and polycondensation reaction is conducted in their presence.

The transesterification reaction will normally be conducted under ordinary pressure, but conducting it under a pressure of 0.05-0.20 MPa will further promote the reaction catalyzed by the action of the titanium compound component (A) while also avoiding bulk generation of diethylene glycol by-product, so that more favorable thermal stability and other properties can be achieved. The temperature is preferably 160-260°C.

When the aromatic dicarboxylic acid used for the invention is terephthalic acid, the starting materials used for the polyester will be terephthalic acid and dimethyl terephthalate. In this case, there may be used recovered dimethyl terephthalate obtained by depolymerization of a polyalkylene terephthalate, or recovered terephthalic acid obtained by hydrolysis thereof. The use of reprocessed polyesters from salvaged PET bottles, fiber products, polyester film products and the like is preferred from the standpoint of effective utilization of resources.

The polycondensation reaction may be carried out in a single tank or in a plurality of separate tanks. The obtained product is a polyester according to the invention, and the polyester obtained by the polycondensation process is usually extruded in a molten state and cooled to form particles (chips).

The polyester used for the invention, which is obtained by the polycondensation process described above, may be further subjected to solid phase polycondensation if desired.

The solid phase polycondensation consists of one or more steps and is carried out at a temperature of 190-230°C under a pressure of 1 kPa to 200 kPa in an inert gas atmosphere such as nitrogen, argon or carbon dioxide gas.

The particulate polyester obtained from the solid phase polycondensation process is then subjected to water treatment involving contact with water, steam, a steam-laden inert gas or steam-laden air as necessary, for inactivation of the catalyst remaining in the chips.

The polyester production process described above comprising esterification and polycondensation steps may be carried out in a batch, semi-continuous or continuous system.

The polyester polymer used for the invention is preferably selected from among polyethylene terephthalate, polytrimethylene terephthalate and polytetramethylene terephthalate.

The polyester used for the invention may, if necessary, contain small amounts of additives such as antioxidants, ultraviolet absorbers, flame retardants, fluorescent brighteners, delustering agents, color correctors, antifoaming agents, antistatic agents, antimicrobial agents, light stabilizers, thermal stabilizers, light blockers or the like, and preferably there are added titanium dioxide as a delustering agent and antioxidants as stabilizers.

The titanium dioxide used preferably has a mean particle size of 0.01-2 μm, and is preferably included in the polyester polymer at 0.01-10 wt%.

Incidentally, the catalyst-derived titanium content in the polyester polymer does not include the titanium derived from any titanium dioxide added as a delustering agent.

When the polyester polymer contains titanium dioxide as a delustering agent, the titanium dioxide of the delustering agent may be removed from the polyester polymer sample for measurement by dissolving the polyester polymer in hexafluoroisopropanol, supplying the solution to centrifugation to separate and precipitate the titanium dioxide particles from the solution, separating and collecting the supernatant liquid by the gradient method and evaporating off the solvent from the collected fraction to prepare the testing sample.

As antioxidants there are preferably used hindered phenol-based antioxidants. An antioxidant is preferably added at no greater than 1 wt% and more preferably 0.005-0.5 wt%. Addition in excess of 1 wt% will result in a saturated effect and may cause scum production during melt spinning. Hindered phenol-based antioxidants may also be used in combination with thioether-based secondary antioxidants.

There are no particular restrictions on the method of adding such antioxidants to the polyester, and they may be added at any desired stage from initiation of the transesterification reaction to completion of the polycondensation reaction.

The second object of the invention is to provide, in addition to the first object, polyester different-contraction commingled yarn which gives excellent bulk and a wool-like feel. This object is achieved by the following polyester different-contraction commingled yarn.

Specifically, this is polyester different-contraction commingled yarn comprising as the principal component a polyester polymer produced by polycondensation in the presence of the aforementioned specific catalyst, wherein the low-shrinkage filaments are a polyester partially oriented yarn with a boiling water shrinkage ratio of no greater than 5% and the high-shrinkage filaments are polyester yarn with a boiling water shrinkage ratio of 8% or greater.

When the aforementioned two different filaments are combined and different-contraction commingled yarn composed of these filaments is used to make a cloth, it may be subjected to ordinary relaxation heat treatment to impart the cloth with excellent bulk.

If the boiling water shrinkage ratio of the low-shrinkage filaments is higher than 5%, the low-shrinkage filaments will tend to undergo excessive shrinkage in the heat treatment after fabrication of the cloth, thereby preventing the desired bulk from being achieved. Self-extending yarn is most preferred as the low-shrinkage filaments.

On the other hand, a boiling water shrinkage ratio of the high-shrinkage filaments of less than 8% tends to result in a smaller difference in the filament ends with the low-shrinkage filaments, making it difficult to achieve high bulk. However, if the boiling water shrinkage ratio is too high, when used in a woven fabric the elongation recovery will be poor tending to produce warps ("smiles"), and therefore an appropriate upper limit is 25%. The preferred range for the boiling water shrinkage ratio of the high-shrinkage filaments is 12-20%.

The polyester different-contraction commingled yarn may be produced, for example, by the method described below.

The low-shrinkage filaments of the invention, i.e. the relaxation heat-treated polyester partially oriented yarn, may be obtained, for example, by setting a polyester partially oriented yarn obtained at a taking-up speed of 2200-4500 m/min, for 0.01-0.30 second with an overfeed of 0.5-5.0% and at non-contact heater temperature of 160-210°C.

The constituent polyester of the high-shrinkage filaments are preferably polyethylene terephthalate copolymerized with isophthalic acid (preferably copolymerization at 5-30 mole percent based on the acid component). When such a polyester is used, the high-shrinkage filaments may be obtained by, for example, first winding up the undrawn polyester filament at a spinning speed of 1000-1500 m/min and then drawing and heat setting it at a draw ratio of 2.5-3.5 and a setting temperature of 150-180°C. Here, the elongation of the high-shrinkage filaments is preferably in the range of 45-60%.

The polyester different-contraction commingled yarn is preferably obtained by entangling the aforementioned low-shrinkage and high-shrinkage filaments. The entangling method is not particularly restricted, but air entangling is preferably employed. The proportion used in this case is preferably high-shrinkage filaments sheath yarn:low-shrinkage filaments = 25:75 to 75:25 (by weight). The air entangling method may be interlacing or Taslan processing. The obtained entangled yarn may also be subjected to post-treatment including twisting or sizing-heat setting, as necessary.

The polyester different-contraction commingled yarn described above may be used, for example, as a warp and/or weft yarn for weaving and subjected to relaxation heat treatment to manufacture a woven fabric with excellent bulk. The woven fabric may also be alkali reduced either after or during the relaxation heat treatment. The alkali reduction rate in this case may be appropriately selected in the range of 5-30 wt%, depending on the intended bulk.

The third object of the invention is to provide, in addition to the first object, a polyester commingled yarn which gives cloth with a luxurious worsted feel and an excellent stretch feel and non-glitter effect. This object is achieved by the following polyester different-contraction commingled yarn.

Specifically, this is polyester different-contraction commingled yarn comprising as the principal component a polyester polymer obtained by polycondensation in the presence of the aforementioned specific catalyst, wherein both the high-shrinkage filaments and low-shrinkage filaments are latent crimping conjugated filaments of two different polyesters conjugated in a side-by-side fashion or eccentric core-sheath fashion, the shrinkage ratio of the low-shrinkage filaments are 0.5-8.0% and the boiling water shrinkage ratio of the high-shrinkage filaments are at least 10%.

In the polyester different-contraction commingled yarn described above, both the high-shrinkage filaments and low-shrinkage filaments are both latent crimping conjugated filaments of two different polyesters from among the aforementioned specific polyester polymers conjugated in a side-by-side fashion or eccentric core-sheath fashion. Here, the combination of polyesters in the conjugated filaments may be a combination of different polyesters among the polyesters mentioned below, or it may be a combination of the same polyester with different intrinsic viscosities.

The low-shrinkage filaments are preferably conjugated filaments obtained by conjugating polyethylene terephthalate with different intrinsic viscosities. This type of conjugated filament will give a softer cloth with a more delicate touch. The intrinsic viscosity of the constituent polyester of the conjugated filament (as measured at a temperature of 30°C using an orthochlorophenol solvent) is preferably in the range of 0.50-1.0 for the low-shrinkage component and in the range of 0.35-0.55 for the high-shrinkage component, with a difference of at least 0.15 between the two, from the standpoint of facilitating yarn-making stability and latent crimping expression.

On the other hand, the high-shrinkage filaments are preferably a conjugated filament obtained by conjugating polyethylene terephthalate copolymerized with isophthalic acid to 8-15 mole percent based on the total acid component, and a polyester containing substantially no copolymerized component.

If the boiling water shrinkage ratio of the low-shrinkage filaments is less than 0.5%, it will tend to be difficult to obtain a luxurious worsted feel. On the other hand, if the boiling water shrinkage ratio is greater than 8.0%, the shrinkage difference with the high-shrinkage filaments described hereunder will be smaller, tending to prevent an excellent stretch feel or stretch property. The boiling water shrinkage ratio of the low-shrinkage filaments is preferably 2.0-6.0%.

The method for producing the low-shrinkage filaments will be explained in detail below, but the low-shrinkage filaments are filaments taken up at a taking-up speed of 2000-4000 m/min in melt spinning and subjected to relaxation heat treatment. Using this type of conjugated filament will give a softer cloth with an excellent luxurious worsted feel having a delicate touch.

On the other hand, if the boiling water shrinkage ratio of the high-shrinkage filaments is less than 10%, the stretch property will tend to be lower. In addition, the difference with the shrinkage ratio of the low-shrinkage filaments will be insufficient and it will be difficult to obtain an excellent luxurious worsted feel. The boiling water shrinkage ratio of the high-shrinkage filaments is preferably 10-50% and more preferably 10-40%.

The crimp ratio of the high-shrinkage filaments after boiling water treatment is preferably at least 1.5%. If the crimp ratio is less than 1.5%, the stretch property will not be very high and it will be difficult to obtain a luxurious worsted feel.

In the polyester different-contraction commingled yarn described above, the low-shrinkage and high shrinkage filaments are blended and entangled to make a commingled yarn which is then heat treated so that high-shrinkage filaments are disposed mainly in the core portion and low-shrinkage filaments are disposed mainly in the sheath portion. The difference in shrinkage ratios of the low-shrinkage and high-shrinkage filaments in the core and sheath portions will result in crimping with different crimp orientations and cycles, while the different crimps expressed in the core and sheath portions of the commingled yarn form a two-level crimping structure. Such a two-level crimping structure will impart a luxurious worsted feel to cloths while also providing an adequate stretch property. Also, it was found that disposing low-shrinkage filaments in the sheath portion gives a highly excellent luxurious worsted feel not found in the prior art.

The single filament size of the low-shrinkage filaments is preferably 0.05-3.5 dtex while the single filament size of the high-shrinkage filaments is preferably 0.55-15.0 dtex. Also, the single filament size of the low-shrinkage filaments is preferably smaller than the single filament size of the high-shrinkage filaments, with a difference between them of preferably 0.5 dtex or greater and more preferably 1.0 dtex or greater. Such a size difference will allow crimping with a different crimp size to be expressed in the core and sheath portions to form a clear two-level crimping structure, while also yielding a cloth with a more delicate touch and excellent luxurious worsted feel.

The polyester different-contraction commingled yarn described above is commingled yarn obtained by blended entangling of high-shrinkage and low-shrinkage filaments, but an excessively low number of tangles will result in insufficient entangling between the high-shrinkage and low-shrinkage filaments and will tend to give the cloth surface a rustic appearance, while an excessively high number of tangles will reduce the gaps between the filaments and produce insufficient bulging of the cloth, making it difficult to achieve a luxurious worsted feel. The number of tangles is preferably in the range of 10-90/m and more preferably in the range of 15-50/m.

The polyester different-contraction commingled yarn which is obtained by blended entangling of high-shrinkage and low-shrinkage filaments can be produced without conventional false twisting steps. Consequently, the commingled yarn of the invention can yield a cloth with a so-called non-glitter effect, exhibiting none of the glitter or shininess produced by deformation of the filament cross-sections by false twisting.

There are no particular restrictions, therefore, on the single filament cross-sectional shapes of the low-shrinkage and high-shrinkage filaments, but in order to obtain a non-glitter effect, crushed and deformed cross-sections such as produced with false twisted yarn are not preferred.

The polyester different-contraction commingled yarn may be produced, for example, by the following method.

The low-shrinkage filaments are obtained by drying two different polyesters in pellet form by ordinary methods, melting them with an ordinary melt spinning apparatus provided with a screw extruder, performing conjugated spinning in a side-by-side fashion or eccentric core-sheath fashion, cooling, adding an appropriate lubricant, and taking up at a taking-up speed of 2000-4000 m/min without drawing to produce latent crimping conjugated filament. If the taking-up speed exceeds 4000 m/min, it will be difficult to adjust the boiling water shrinkage ratio of the conjugated filament to 0.5-8.0% by the relaxation heat treatment described below, and it will tend to be more difficult to produce a cloth with a luxurious worsted feel. On the other hand, if the taking-up speed is less than 2000 m/min the obtained conjugated filament will tend to become brittle, resulting in poor handleability when used in commingled yarn.

In latent crimping conjugated filaments having such a shrinkage ratio difference, the conjugated filaments drawn at a spinning speed in the aforementioned range may have the heat treatment conditions adjusted for relaxation heat treatment in order to obtain the low-shrinkage filaments with a boiling water shrinkage ratio of 0.5-8.0%. For example, after first winding up the drawn conjugated filaments, they may be passed through a heat treatment apparatus equipped with a heater between at least two rotating rollers for relaxation heat treatment to obtain low-shrinkage filaments with a boiling water shrinkage ratio of 0.5-8.0%. The heater is preferably a non-contact type on the running side. The relaxation ratio in this case will differ depending on the spinning speed, etc., but is preferably in the range of 1-45% and more preferably in the range of 1-10%. A relaxation ratio of less than 1% will tend to result in a shrinkage ratio of higher than 8%. On the other hand, a relaxation ratio of greater than 45% will result in more running filaments winding onto the roller during relaxation heat treatment.

The heater temperature is in the range of preferably 180-280°C and more preferably 200-260°C. If the heater temperature is below 180°C, the boiling water shrinkage ratio will tend to exceed 10%. If the heater temperature is above 280°C, filament breakage will tend to occur near the heater.

The high-shrinkage filaments may be obtained by the following method. Two different types of polyester pellets are melt spun from a publicly known conjugate spinning nozzle and wound up at 1000-4000 m/min, and then the obtained undrawn filament is drawn. The undrawn filament may also be drawn immediately after spinning without being wound up first.

The drawing is preferably carried out with preheating in a temperature range of 30-100°C and a heat setting temperature in the range of 140-280°C. A preheating temperature of below 30°C will tend to result in non-uniform drawing and produce filaments with numerous quality irregularities. A preheating temperature of above 100°C, on the other hand, will tend to cause spinning instability, including greater motion of the filament on the rollers and increased filament spots. A heat setting temperature of below 140°C will prevent stable drawing, tending to generate drawing irregularities and produce fluff or dyeing spots, while a heat setting temperature of above 280°C will tend to cause filament breakage during heat setting.

The draw ratio will differ depending on the spinning speed, but it is preferably set so that the elongation of the high-shrinkage filaments after drawing is 25-65%. If the drawing ratio is set so that the elongation is less than 25%, more filament breakage and fluff will be produced by the drawing. Conversely, if the drawing ratio is set so that the elongation is greater than 65%, more undrawn multifilaments will be seen in the resulting high-shrinkage filaments.

Low-shrinkage filaments and high-shrinkage filaments obtained in the manner described above may be paralleled and, with a 1-5% overfeed and using a publicly known interlace nozzle, the nozzle air pressure may be adjusted for 15-90 tangles/m for blended entangling to obtain polyester commingled yarn according to the invention.

The obtained polyester different-contraction commingled yarn may be woven or knitted and subjected to commonly employed scouring, dyeing and finishing treatment steps to produce latent crimping, in order to manufacture a textile with an excellent luxurious worsted feel, stretch property and non-glitter effect.

## Examples

The present invention will now be explained in detail through the following examples.

(1) Titanium metal element content, phosphorus element content

A sample of the particulate polyester was heated to a melt on an aluminum plate and then supplied to a compression press and formed into a level molded test article. The sample was supplied to a Model 3270E fluorescent X-ray analyzer by Rigaku Corp. for measurement of the titanium metal element content and phosphorus element content.

(2) Intrinsic viscosity

This was measured at 35°C using orthochlorophenol as the solvent.

(3) Bulk

The bulk was determined by measuring the wool worsting (St) at each standard, and was graded on a 1-5 level scale.

(4) Cloth fluff

The degree of fluff was evaluated and graded on a 1-5 level scale, with 5 being the lowest amount of fluff.

(5) Deep dyeing property

Dyeing was performed with a black disperse dye under the same conditions, and grading was on a 1-5 level scale based on visual examination, with the deepest color as level 5.

The parameters were measured by the following methods and intrinsic viscosity was measured by method (1) for Examples 4-10 and Comparative Examples 4-5.

(6) Boiling water shrinkage ratio (%)

This was measured according to Method 8.18.1B of JIS L1013.

(7) Crimp ratio

The yarn was wound onto a reel with a tension of 1225/2500 mN x 9 x size in tex (50 mg x size in denier) to prepare a skein of approximately 3300 dtex (3000 de). After preparation of the skein, a load of 49/2500 mN x 9 x size in dtex + 49/25 mN x 9 x size in tex (2 mg x size in denier + 200 mg x size in denier) was applied to one end of the skein and the length L0 (cm) after one minute was measured. Next, after removing the load of 49/25 mN x 9 x size in tex (200 mg x size in denier), treatment was carried out for 20 minutes in boiling water at 100°C. After the boiling water treatment, the 49/2500 mN x 9 x size in tex (2 mg x size in denier) was removed and the yarn was naturally dried for 24 hours in a free state. The 49/2500 mN x 9 x size in tex + 49/25 mN x 9 x size in tex (2 mg x size in denier + 200 mg x size in denier) load was again applied to the naturally dried sample and the length L1 (cm) after one minute was measured. The load of 49/25 mN x 9 x size in tex (200 mg x size in denier) load was then removed, the length L2 after one minute was measured, and the total crimp ratio was calculated by the following formula. The measurement was conducted 10 times and the average value was determined.

$$\text{Crimp ratio (\%)} = [(L1-L2)/L0] \times 100$$

(8) Number of tangles (/m)

This was measured according to JIS L1013 8.15

(9) Stretch factor

A 5 cm x 20 cm test piece was subjected to an initial load of 20 g using a tensile tester equipped with an automatic recorder, and the test piece was clamped at a clamp spacing of 10 cm, stretched to a 1.5 kg constant load at a pull speed of 30 cm/min and then immediately restored to the original position at the same speed, and a load-elongation curve was drawn. The stretch factor was expressed by the following formula, where the elongation distance (to 0.01 cm) after stretching to the 1.5 kg constant load and just before immediately restoring it to the original position at the same speed is represented by L (cm).

$$ST = [L/10] \times 100(\%)$$

(10) Luxurious worsted feel and non-glitter effect

The commingled yarn was woven into a twill weave with 192 strand/3.79 cm warp and 144 strand/3.79 cm weft and then dyed blue, and the luxurious worsted feel (soft delicate touch, bulging feel) and non-glitter effect were evaluated

by 5 experts. The effect was indicated as good or poor.

(11) Polymer discharge state

The discharge state of the polymer when discharged from the spinneret was observed during spinning, and the discharge state was ranked on the following scale. Observation was from the second day after the start of conjugate spinning.
Level 1: Discharged filament drew a consistent falling line with stable running
Level 2: Small bends, kinks or swirls in discharged filament
Level 3: Large bends, kinks or swirls in discharged filament. Partial contact of polymer with spinneret surface, resulting in frequent filament breakage.

(12) Fluff count (/$10^6$ m)

Upon placing 250 package-wound (or pirn-wound) polyester commingled yarns through a warping machine equipped with a fluff detector, the yarns were warped and drawn for 42 hours at a speed of 400 m/min. The warping machine was periodically shut down and the presence of fluff visually confirmed, and the total confirmed fluff count was calculated per $10^6$ m of the strand length and recorded as the fluff count.

Example 1

Preparation of titanium compound:

A 2 L three-necked flask equipped with a function allowing mixing and stirring of the contents was prepared, 919 g of ethylene glycol and 10 g of acetic acid were placed therein, and after stirring and mixing, 71 g of titanium tetrabutoxide was slowly added to obtain a (transparent) solution of a titanium compound in ethylene glycol. This solution will hereinafter be abbreviated as "TB solution". The titanium atom concentration of the solution was 1.02%.

Preparation of phosphorus compound:

A 2 L three-necked flask equipped with a function allowing heating, mixing and stirring of the contents was prepared, and 656 g of ethylene glycol was placed therein and heated to 100°C while stirring. Upon reaching 100°C, 34.5 g of monolauryl phosphate was added, and the mixture was heated, mixed and stirred to dissolution to obtain a transparent solution. This solution will hereinafter be abbreviated as "P1 solution".

Preparation of catalyst:

Next, 310 g of the prepared TB solution was slowly added to the P1 solution (approximately 690 g) under heating control at 100°C and stirring, and upon addition of the entire amount, stirring was continued for 1 hour at a temperature of 100°C to complete reaction of the titanium compound and phosphorus compound. The mixing ratio of the TB solution and P1 solution was 2.0 as the molar ratio of phosphorus atoms with respect to titanium atoms. The product obtained by the reaction was insoluble in ethylene glycol and was therefore present as a turbid, fine precipitate. This solution will hereinafter be abbreviated as "TP1-2.0 catalyst".

In order to analyze the obtained reaction precipitate, a portion of the reaction solution was filtered with a 5μ pore filter to obtain the precipitated reaction product as a solid, and it was then washed with water and dried. The elemental concentration of the obtained precipitated reaction product was analyzed by XMA, yielding results of 12.0% titanium, 16.4% phosphorus and a phosphorus atom molar ratio of 2.1 with respect to titanium atoms. Solid NMR analysis yielded the following results. C-13 CP/MAS (75.5 Hz frequency) measurement revealed disappearance the butoxide-derived chemical shift peaks at 14 ppm, 20 ppm and 36 ppm for titanium tetrabutoxide, while P-31 DD/MAS (121.5 Hz frequency) measurement confirmed a new chemical shift peak at 22 ppm not found in conventional monolauryl phosphate. These data clearly indicated that the precipitate obtained under these conditions was a new compound resulting from reaction of the titanium compound and phosphorus compound.

Separately, a slurry prepared by mixing 179 parts by mass of high purity terephthalic acid and 95 parts by mass of ethylene glycol was supplied at a constant rate to a reactor already holding 225 parts by mass of an oligomer while stirring in a nitrogen atmosphere under conditions kept at 255°C, ordinary pressure, and esterification reaction was carried out for 4 hours to completion while removing out of the system the water and ethylene glycol generated by the reaction. The esterification rate was >98% and the polymerization degree of the produced oligomer was about 5-7.

After transferring 225 parts by mass of the oligomer obtained by the esterification reaction to a polycondensation

reactor, 3.34 parts by mass of the "TP1-2.0 catalyst" produced earlier was charged in as the polycondensation catalyst. The reaction temperature in the system was raised from 255°C to 280°C and the reaction pressure lowered from atmospheric pressure to 60 Pa in stages, for polycondensation reaction while removing out of the system the water and ethylene glycol generated by the reaction.

The extent of the polycondensation reaction was confirmed while monitoring the load on the stirring blade in the system, and the reaction was suspended when the desired degree of polymerization was reached. The reaction product in the system was then continuously extruded into a strand from the discharge port and then cooled and cut to obtain granular pellets of approximately 3 mm. The intrinsic viscosity of the obtained polyethylene terephthalate was 0.630.

The pellets were used as starting material for spinning at a spinning speed of 3200 m/min to obtain 90 dtex/24 filaments polyester partially oriented yarn (single filament size: 3.8 dtex), which was subjected to heat treatment for 0.05 sec with an overfeed of 1.5% and a setting temperature of 185°C (plate heater), to prepare sheath filaments with a boiling water shrinkage ratio of 0%.

Separately, pellets of the polyester copolymerized with isophthalic acid at 10.0% (intrinsic viscosity: 0.640) after preparation of the catalyst in the same manner as above were used as starting material for spinning at a spinning speed of 1300 m/min, and after first obtaining the undrawn yarn, it was drew and heat set at a draw ratio of 3.2 and a setting temperature of 160°C, to obtain 91 dtex/15 filaments separately drawn yarn (single filament size: 6 dtex) with a boiling water shrinkage ratio of 15% as the core filaments.

An air entangled commingled yarn with a core-sheath structure was then obtained by Taslan processing with a high-shrinkage filaments (core filaments side) overfeed of 3% and a low-shrinkage filaments (sheath filaments side) overfeed of 7%, an air pressure of 784 kPa and a speed of 400 m/min.

The obtained air entangled commingled yarn was twisted at 1200 T/M [$15300/(dtex/1.11)^{1/2}$; dtex = 181] to obtain twisted yarn for use as the warp and weft, with 2/2 twill weaving at a grey fabric density of 42.2 strands/cm warp and 21.9 strands/cm weft. The grey fabric was pre-relaxed for 20 seconds at 100°C and then a circular relaxer was used for relaxation for 40 minutes at a top temperature of 120°C, and after adequately shrinking the warp and weft by presetting after air drying, the fabric was subjected to 13 wt% alkali reduction. A disperse dye was used for dyeing at 135°C for 60 minutes using a jet dyeing machine for finishing. The evaluation results for the obtained dyed cloth are shown in Table 1. The obtained woven fabric had a wool-like feel.

Comparative Example 1

The same procedure was carried out as in Example 1, except that the polycondensation catalyst was changed to a 1.3% solution of antimony trioxide in ethylene glycol, the charged amount was 4.83 parts by mass, and there was further charged 0.121 part of a 25% solution of trimethyl phosphate in ethylene glycol as a stabilizer, to obtain polyethylene terephthalate with an intrinsic viscosity of 0.630 and a polyester obtained by copolymerization thereof with isophthalic acid at 10.0 mole percent. These were used to make different-contraction commingled yarn in the same manner as Example 1, and a dyed cloth was obtained. The evaluation results are shown in Table 1.

Comparative Example 2

The same procedure was carried out as in Example 1, except that the TB solution prepared in Example 1 alone was used as the polycondensation catalyst, and the charged amount was 1.03 parts by mass, to obtain polyethylene terephthalate with an intrinsic viscosity of 0.630 and a polyester obtained by copolymerization thereof with isophthalic acid at 10.0 mole percent. This was used to make different-contraction commingled yarn in the same manner as Example 1, and a dyed cloth was obtained. The evaluation results are shown in Table 1.

Table 1

| | Example 1 | Comparative Example 1 | Comparative Example 2 |
|---|---|---|---|
| Polymerization catalyst | TP1-2.0 | $Sb_2O_3$ | TB solution |
| Bulk | 4-5 | 4-5 | 4-5 |
| Fluff | 5 | 3-4 | 5 |
| Deep dyeing property | 4-5 | 4 | 2-3 |

Example 2

After charging 0.009 part of tetra-n-butyl titanate (TBT) into a mixture of 100 parts by mass of dimethyl terephthalate and 70 parts by mass of ethylene glycol in a pressure reaction-capable stainless steel reactor, pressurization was conducted at 0.07 MPa for transesterification reaction while increasing the temperature from 140°C to 240°C, and then 0.035 part by mass of triethyl phosphonoacetate (TEPA) was added to terminate the transesterification reaction.

The reaction product was then transferred to a polymerization reactor, the temperature was raised to 290°C, and polycondensation reaction was conducted in a high vacuum of no greater than 26.67 Pa to obtain a polyester with a limiting viscosity of 0.630 and a diethylene glycol content of 1.5%, which was pelleted by an ordinary method.

The pellets were used as starting material for spinning at a spinning speed of 3200 m/min to obtain 90 dtex/24 filaments polyester partially oriented yarn (single filament size: 3.8 dtex), which was subjected to heat treatment for 0.05 sec with an overfeed of 1.5% and a setting temperature of 185°C (plate heater), to prepare a low-shrinkage filaments with a boiling water shrinkage ratio of 0%.

Separately, pellets of the polyester copolymerized with isophthalic acid at 10.0% (intrinsic viscosity: 0.640) after polycondensation in the same manner as above were used as starting material for spinning at a spinning speed of 1300 m/min, and after first obtaining the undrawn yarn, it was drew and heat set at a draw ratio of 3.2 and a setting temperature of 160°C, to obtain 91 dtex/15 filaments separately drawn yarn (single filament size: 6 dtex) with a boiling water shrinkage ratio of 15% as the high-shrinkage filaments.

An air entangled commingled yarn with a core-sheath structure was then obtained by Taslan processing with a high-shrinkage filaments (core filaments side) overfeed of 3% and a low-shrinkage filaments (sheath filaments side) overfeed of 7%, an air pressure of 784 kPa and a speed of 400 m/min.

The obtained air entangled commingled yarn was twisted at 1200 T/M [15300/(dtex/1.11)$^{1/2}$; dtex = 181] to obtain twisted yarn for use as the warp and weft, with 2/2 twill weaving at a grey fabric density of 42.2 strands/cm warp and 21.9 strands/cm weft. The grey fabric was pre-relaxed for 20 seconds at 100°C and then a circular relaxer was used for relaxation for 40 minutes at a top temperature of 120°C, and after adequately shrinking the warp and weft by presetting after air drying, the fabric was subjected to 13 wt% alkali reduction. A disperse dye was used for dyeing at 135°C for 60 minutes using a jet dyeing machine for finishing. The evaluation results for the obtained dyed cloth are shown in Table 2. The obtained woven fabric had a wool-like feel.

## Example 3

The same procedure was carried out as in Example 2, except that 0.016 part of titanium trimellitate (TMT) synthesized by the method described below was used as the titanium compound. The evaluation results for the obtained dyed cloth are shown in Table 2.

Titanium trimellitate synthesis method:

Tetrabutoxytitanium was added to a solution of trimellitic anhydride in ethylene glycol (0.2%) at 1/2 mole with respect to the trimellitic anhydride, and reaction was conducted for 60 minutes in air at normal pressure while maintaining a temperature of 80°C, after which the system was cooled to ordinary temperature and the produced catalyst was recrystallized with a 10-fold amount of acetone, and then the precipitate was filtered out with filter paper and dried at 100°C for 2 hours to obtain the target compound.

## Comparative Example 4

After charging 0.064 part by mass of calcium acetate monohydrate into a mixture of 100 parts by mass of dimethyl terephthalate and 70 parts by mass of ethylene glycol in a pressure reaction-capable stainless steel reactor, pressurization was conducted at 0.07 MPa for transesterification reaction while increasing the temperature from 140°C to 240°C, and then 0.044 part by mass of 56 wt% aqueous phosphoric acid solution was added to terminate the transesterification reaction.

The reaction product was then transferred to a polymerization reactor, diantimony trioxide was added in the amount shown in the table, the temperature was raised to 290°C, and polycondensation reaction was conducted in a high vacuum of no greater than 26.67 Pa to obtain a polyester (intrinsic viscosity: 0.630), which was pelleted according to a common method. Separately, a polyester obtained by copolymerization of this polyester with isophthalic acid at 10.0% (intrinsic viscosity: 0.640) was also obtained and pelleted according to a common method. The pellets were used in the same procedure as Example 2. The evaluation results for the obtained dyed cloth are shown in Table 2.

Table 2

| | | Example 2 | Example 3 | Comp. Ex. 3 |
|---|---|---|---|---|
| Ti compound | Type | TBT | TMT | - |
| | Content (mmol%) | 5 | 5 | - |
| P compound | Type | TEPA | TEPA | - |
| | Content (mmol%) | 30 | 30 | - |
| Sb compound | Type | - | - | $Sb_2O_3$ |
| | Content (mmol%) | - | - | 31 |
| $M_p/M_{Ti}$ | | 6 | 6 | - |
| $M_p+M_{Ti}$ (mmol%) | | 35 | 35 | - |
| Bulk | | 4-5 | 4-5 | 4-5 |
| Fluff | | 5 | 5 | 3-4 |
| Deep dyeing property | | 4-5 | 4-5 | 4 |

Example 4

Preparation of a titanium compound, phosphorus compound and catalyst and production of an oligomer were carried out in the same manner as Example 1.

After transferring 225 parts by mass of the obtained oligomer to a polycondensation reactor, 3.34 parts by mass of the "TP1-2.0 catalyst" produced earlier was charged in as the polycondensation catalyst. The reaction temperature in the system was then raised from 255°C to 280°C and the reaction pressure was lowered from atmospheric pressure to 60 Pa in stages, for polycondensation reaction while removing out of the system the water and ethylene glycol generated by the reaction.

The extent of the polycondensation reaction was confirmed while monitoring the load on the stirring blade in the system, and the reaction was suspended when the desired degree of polymerization was reached. The reaction product in the system was then continuously extruded into a strand from the discharge port and then cooled and cut to obtain polyethylene terephthalate pellets with intrinsic viscosities of 0.63, 0.55 and 0.43.

The "TP1-2.0 catalyst" produced earlier was used for transesterification and copolymerization using 161 parts by mass of high purity terephthalic acid, 18 parts by mass of high purity isophthalic acid and 95 parts by mass of ethylene glycol, to obtain pellets of a polyethylene terephthalate-based polyester with an intrinsic viscosity of 0.63, copolymerized with isophthalic acid at 10 mole percent with respect to the total acid component.

The polyethylene terephthalate-based copolymerized polyester and the aforementioned polyethylene terephthalate with an intrinsic viscosity of 0.43 were used for side-by-side conjugate melt spinning in a conjugate weight ratio of 50/50 (melt spinning temperature: 280°C, melt viscosity difference: 70 Pa·sec), and after winding up at a wind-up speed of 1450 m/min, drawing and heat setting were carried out at a draw ratio of 2.4, a draw speed of 600 m/min, a draw temperature of 90°C and a heat setting temperature of 230°C, to obtain 110 decitex/24 filament high-shrinkage filaments.

Separately, the polyethylene terephthalate with an intrinsic viscosity of 0.630 and the polyethylene terephthalate with an intrinsic viscosity of 0.43 were used for side-by-side conjugate melt spinning in a conjugate weight ratio of 50/50 (melt spinning temperature: 285°C, melt viscosity difference: 70 Pa·sec) followed by winding up at a wind-up speed of 3000 m/min to obtain 70 dtex/24 filaments conjugated filaments. The obtained conjugated filaments were passed through a non-contact slit heater set to 230°C (relaxation heat treatment temperature) and subjected to relaxation heat treatment at a relaxation ratio of 3.5% and a through-speed of 400 m/min to make low-shrinkage filaments, and these were combined with the high-shrinkage filaments, subjected to composite entangling with an interlace nozzle air pressure of 0.2 MPa and wound up. The obtained 183 dtex/48 filaments commingled yarn had 35 tangles/m.

No accumulation of foreign matter around the spinneret discharge port was found in any of the conjugated filament spinning, while the polymer discharge state was stable for an extended period and the obtained polyester commingled yarn exhibited excellent quality with low fluff. The boiling water shrinkage ratio of the low-shrinkage filaments and the boiling water shrinkage ratio and crimp ratio of the high-shrinkage filaments are shown in Table 1.

This commingled yarn was woven, and evaluation of the fabric quality indicated satisfactory color tone, an excellent stretch property and non-glitter effect, a delicate touch and appropriate bulge, and an excellent luxurious worsted feel.

Example 5

Commingled yarn was obtained in the same manner as Example 4, except that the heat setting temperature for production of the high-shrinkage filaments was changed from 230°C to 250°C and the relaxation ratio for production of the low-shrinkage filaments was changed from 3.5% to 6%. The evaluation results are shown in Table 3. The color tone of the obtained cloth was satisfactory.

Example 6

Commingled yarn was obtained in the same manner as Example 4, except that the heat setting temperature for production of the high-shrinkage filaments was changed from 230°C to 150°C and the relaxation ratio for production of the low-shrinkage filaments was changed from 3.5% to 8%. The evaluation results are shown in Table 3. The color tone of the obtained cloth was satisfactory.

Comparative Example 4

The same procedure was followed as in Example 4, except that an antimony compound was used as the polyester polymerization catalyst. There was considerable accumulation of foreign matter around the spinneret discharge port during spinning, the polymer discharge state had considerable kinks, swirls and adhesion to the spinneret surface, and the obtained polyester commingled yarn had a high fluff count. The cloth color tone was inferior to that of Example 4.

Table 3

| | | Example 4 | Example 5 | Example 6 | Comp. Ex. 4 |
|---|---|---|---|---|---|
| Discharge state | High-shrinkage filaments | 1 | 1 | 1 | 3 |
| | Low-shrinkage filaments | 1 | 1 | 1 | 3 |
| Low-shrinkage filaments | Shrinkage ratio (%) | 5 | 4 | 1 | 6 |
| High-shrinkage filaments | Shrinkage ratio (%) | 16 | 11 | 26 | 15 |
| | Crimp ratio | 3.0 | 1.5 | 7.9 | 3.0 |
| Commingled yarn fluff count (/10.$^6$ m) | | 0.1 | 0.2 | 0.2 | 2.0 |
| Stretch ratio | | 23 | 19 | 30 | 26 |
| Luxurious worsted feel | | good | good | good | good |
| Non-glitter effect | | good | good | good | good |

Example 7

After charging 0.009 part by mass of tetra-n-butyl titanate into a mixture of 100 parts by mass of dimethyl terephthalate and 70 parts by mass of ethylene glycol in a pressure reaction-capable stainless steel reactor, pressurization was conducted at 0.07 MPa for transesterification reaction while increasing the temperature from 140°C to 240°C, and then 0.035 part by mass of triethyl phosphonoacetate was added to terminate the transesterification reaction. The reaction product was then transferred to a polymerization reactor, the temperature was raised to 290°C, and polycondensation reaction was conducted in a high vacuum of no greater than 26.67 Pa, terminating the reaction at different points of desired polymerization degrees, to obtain polyethylene terephthalates with limiting viscosities of 0.63, 0.55 and 0.43 which were each pelleted according to a common method.

After charging 0.009 part by mass of tetra-n-butyl titanate into a mixture of 90 parts by mass of dimethyl terephthalate, 10 parts by mass of dimethyl isophthalate and 70 parts by mass of ethylene glycol, transesterification and polymerization reaction were carried out by the method described above to obtain a polyethylene terephthalate-based polyester with an intrinsic viscosity of 0.63, copolymerized with isophthalic acid at 10 mole percent with respect to the total acid component, which was then pelleted by a common method.

The isophthalic acid-copolymerized polyethylene terephthalate-based polyester pellets and pellets of the aforementioned polyethylene terephthalate with an intrinsic viscosity of 0.43 were used for side-by-side conjugate melt spinning in a conjugate weight ratio of 50/50 (melt spinning temperature: 280°C, melt viscosity difference: 70 Pa·sec), and after winding up at a wind-up speed of 1450 m/min, drawing and heat setting were carried out at a draw ratio of 2.4, a draw speed of 600 m/min, a draw temperature of 90°C and a heat setting temperature of 230°C, to obtain 110 decitex/24

filaments high-shrinkage filaments.

Separately, the pellets of polyethylene terephthalate with an intrinsic viscosity of 0.630 and the pellets of polyethylene terephthalate with an intrinsic viscosity of 0.43 were used for side-by-side conjugate melt spinning in a conjugate weight ratio of 50/50 (melt spinning temperature: 285°C, melt viscosity difference: 70 Pa·sec) followed by winding up at a wind-up speed of 3000 m/min to obtain 70 dtex/ 24 filaments conjugated filaments. The obtained conjugated filaments were passed through a non-contact slit heater set to 230°C (relaxation heat treatment temperature) and subjected to relaxation heat treatment at a relaxation ratio of 3.5% and a through-speed of 400 m/min to make low-shrinkage filaments, and these were combined with the high-shrinkage filaments, subjected to composite entangling with an interlace nozzle air pressure of 0.2 MPa and wound up. The obtained 183 dtex/48 filaments commingled yarn had 35 tangles/m.

No accumulation of foreign matter around the spinneret discharge port was found in any of the conjugated filaments spinning, while the polymer discharge state was stable for an extended period and the obtained polyester commingled yarn exhibited excellent quality with low fluff. The boiling water shrinkage ratio of the low-shrinkage filaments and the boiling water shrinkage ratio and crimp ratio of the high-shrinkage filaments are shown in Table 4.

This commingled yarn was woven, and evaluation of the fabric quality indicated satisfactory color tone, an excellent stretch property and non-glitter effect, a delicate touch and appropriate bulge, and an excellent luxurious worsted feel.

<u>Example 8</u>

Commingled yarn was obtained in the same manner as Example 7, except that the heat setting temperature for production of the high-shrinkage filaments was changed from 230°C to 250°C and the relaxation ratio for production of the low-shrinkage filaments was changed from 3.5% to 6%. The evaluation results are shown in Table 4. The color tone of the obtained cloth was satisfactory.

<u>Example 9</u>

Commingled yarn was obtained in the same manner as Example 7, except that the heat setting temperature for production of the high-shrinkage filaments was changed from 230°C to 150°C and the relaxation ratio for production of the low-shrinkage filaments was changed from 3.5% to 8%. The evaluation results are shown in Table 4. The color tone of the obtained cloth was satisfactory.

<u>Example 10</u>

Commingled yarn was obtained in the same manner as Example 7, except that the high-shrinkage filaments were changed from 110 dtex/24 filaments to 56 dtex/12 filaments. The evaluation results are shown in Table 4. The color tone of the obtained cloth was satisfactory.

<u>Comparative Example 5</u>

After charging 0.064 part by mass of calcium acetate monohydrate into a mixture of 100 parts by mass of dimethyl terephthalate and 70 parts by mass of ethylene glycol in a pressure reaction-capable stainless steel reactor, pressurization was conducted at 0.07 MPa for transesterification reaction while increasing the temperature from 140°C to 240°C, and then 0.044 part by mass of 56 wt% aqueous phosphoric acid solution was added to terminate the transesterification reaction. The reaction product was then transferred to a polymerization reactor, diantimony trioxide was added in the amount shown in the table, the temperature was raised to 290°C, and polycondensation reaction was conducted in a high vacuum of no greater than 26.67 Pa, terminating the reaction at different points of desired polymerization degrees, to obtain polyethylene terephthalates with limiting viscosities of 0.63 and 0.43 which were each pelleted according to a common method.

After charging 0.064 part by weight of calcium acetate monohydrate into a mixture of 90 parts by mass of dimethyl terephthalate, 10 parts by mass of dimethyl isophthalate and 70 parts by mass of ethylene glycol, transesterification was carried out by the method described above and diantimony trioxide was added for polymerization reaction, to obtain a polyethylene terephthalate-based polyester with an intrinsic viscosity of 0.63, copolymerized with isophthalic acid at 10 mole percent with respect to the total acid component, which was then pelleted by a common method.

High-shrinkage filaments were obtained in the same manner as Example 7, except for using the polyethylene terephthalate pellets with an intrinsic viscosity of 0.63 and the isophthalic acid-copolymerized polyethylene terephthalate-based polyester pellets. Low-shrinkage filaments were also obtained in the same manner as Example 7 except for using the polyethylene terephthalate pellets with an intrinsic viscosity of 0.63 and the polyethylene terephthalate pellets with

an intrinsic viscosity of 0.43. These filaments were combined to make commingled yarn in the same manner as Example 7.

During all of the fiber spinning, there was considerable accumulation of foreign matter around the spinneret discharge port, the polymer discharge state had considerable kinks, swirls and adhesion to the spinneret surface, and the obtained polyester commingled yarn had a high fluff count. The cloth color tone was inferior to that of Example 7.

Table 4

| | | Example 7 | Example 8 | Example 9 | Example 10 | Comp. Ex. 5 |
|---|---|---|---|---|---|---|
| Ti compound Type | | TBT | TBT | TBT | TBT | - |
| Content (mmol%) | | 5 | 5 | 5 | 5 | - |
| P compound Type | | TEPA | TEPA | TEPA | TEPA | - |
| Content (mmol%) | | 30 | 30 | 30 | 30 | - |
| Sb compound Type | | - | - | - | - | $Sb_2O_3$ |
| Content (mmol%) | | - | - | - | - | 31 |
| $M_p/M_{Ti}$ | | 6 | 6 | 6 | 6 | - |
| $M_p+M_{Ti}$ (mmol%) | | 35 | 35 | 35 | 35 | - |
| Discharge state | High-shrinkage filaments | 1 | 1 | 1 | 1 | 3 |
| | Low-shrinkage filaments | 1 | 1 | 1 | 1 | 3 |
| Low-shrinkage filaments | Shrinkage ratio (%) | 6 | 3 | 1 | 5 | 6 |
| High-shrinkage filaments | Shrinkage ratio (%) | 14 | 11 | 28 | 15 | 15 |
| | Crimp ratio | 3.0 | 1.5 | 7.9 | 3.2 | 3.0 |
| Commingled yarn fluff (/$10^6$ m) | | 0.1 | 0.2 | 0.2 | 0.1 | 2.0 |
| Stretch ratio | | 23 | 19 | 30 | 24 | 26 |
| Luxurious worsted feel | | Good | good | good | good | good |
| Non-glitter effect | | Good | good | good | good | good |

Industrial Applicability

The polyester different-contraction commingled yarn of the present invention can produce cloths with bulk and excellent color tone. The cloths not only have such excellent color tone but also virtually no fluff and highly superior quality, and may therefore be applied for luxurious clothing purposes.

## Claims

1. Polyester different-contraction commingled yarn comprising two different types of filaments with different boiling water shrinkage ratios, comprising polyester polymer as the principal component individually,
wherein
the polyester polymer is one produced by polycondensation of an aromatic dicarboxylate ester in the presence of a catalyst,
the catalyst comprises at least one ingredient selected from among mixture (1) and reaction product (2) below,
the mixture (1) is a mixture of the following components (A) and (B):

(A) a titanium compound component comprising at least one compound selected from the group consisting of:

(a) titanium alkoxides represented by the following general formula (I):

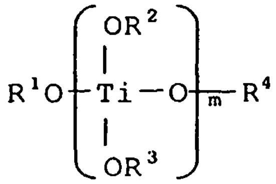

(I)

[wherein $R^1$, $R^2$, $R^3$ and $R^4$ each independently represent one species selected from alkyl groups having 1 to 20 carbon atoms and phenyl group, m represents an integer of 1-4, and when m is an integer of 2, 3 or 4, the two, three or four $R^2$ and $R^3$ groups may be the same or different], and

(b) reaction products of titanium alkoxides of general formula (I) above with aromatic polyvalent carboxylic acids represented by the following general formula (II):

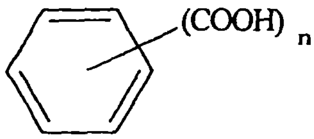

(II)

[wherein n represents an integer of 2-4] or their anhydrides, and

(B) a phosphorus compound component comprising at least one compound represented by the following general formula (III):

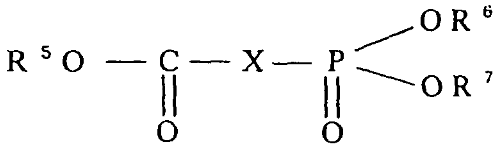

(III)

[wherein $R^5$, $R^6$ and $R^7$ each independently represent alkyl groups having 1 to 4 carbon atoms, and X represents at least one species selected from among $-CH_2-$ group and $-CH_2(Y)$ group (where Y represents phenyl group)],
the catalyst mixture (1) is used with a mixing ratio such that the ratio (%) $M_{Ti}$ of the millimoles of titanium element in the titanium compound component (A) with respect to the number of moles of the aromatic dicarboxylate ester and the ratio (%) $M_p$ of the millimoles of phosphorus element in the phosphorus compound component (B) with respect to the number of moles of the aromatic dicarboxylate ester satisfy the following expressions (i) and (ii):

$$1 \leq M_p/M_{Ti} \leq 15 \qquad (i)$$

$$10 \leq M_p+M_{Ti} \leq 100 \qquad (ii),$$

and the reaction product (2) is the reaction product of the following components (C) and (D):
(C) a titanium compound component comprising at least one compound selected from the group consisting of:

(c) titanium alkoxides represented by formula (I) above and
(d) reaction products of titanium alkoxides of general formula (I) above with aromatic polyvalent carboxylic

acids represented by general formula (II) above or their anhydrides, and

(D) a phosphorus compound component comprising at least one phosphorus compound represented by the following general formula (IV):

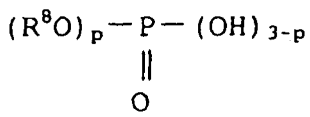

(IV)

wherein $R^8$ represents alkyl group having 1 to 20 carbon atoms or aryl group having 6 to 20 carbon atoms, and p represents an integer of 1 and the filaments with a low boiling water shrinkage ratio (low-shrinkage filaments) are filaments taken up at a take-up speed of 2000-4000 in/min in melt spinning and subjected to relaxation heat treatment.

**2.** Polyester different-contraction commingled yarn according to claim 1, wherein component (A) of the mixture (1) for the catalyst and component (C) of the reaction product (2) for the catalyst contain the respective titanium alkoxide (a) and titanium alkoxide (c) each in a reaction molar ratio in the range of 2:1 to 2:5 with respect to the aromatic polyvalent carboxylic acid represented by general formula (II) or its anhydride.

**3.** Polyester different-contraction commingled yarn according to claim 1 or 2, wherein in the reaction product (2) for the catalyst, the reaction ratio of component (D) with respect to component (C) is in the range of 1:1 to 3:1, in terms of the ratio of the moles of phosphorus atoms in component (D) to the moles of titanium atoms in component (C) (P/Ti).

**4.** Polyester different-contraction commingled yarn according to any one of claims 1 to 3, wherein the phosphorus compound of general formula (IV) used in the reaction product (2) for the catalyst is selected from among monoalkyl phosphates.

**5.** Polyester different-contraction commingled yarn according to any one of claims 1 to 4, wherein the aromatic dicarboxylate ester is a diester produced by transesterification of an aromatic dicarboxylic acid dialkyl ester and an alkylene glycol in the presence of a titanium compound-containing catalyst.

**6.** Polyester different-contraction commingled yarn according to any one of claims 1 to 5, wherein the aromatic dicarboxylic acid is selected from among terephthalic acid, 1,2-naphthalenedicarboxylic acid, phthalic acid, isophthalic acid, diphenyldicarboxylic acid and diphenoxyethanedicarboxylic acid, and the alkylene glycol is selected from among ethylene glycol, butylene glycol, trimethylene glycol, propylene glycol, neopentyl glycol, hexanemethylene glycol and dodecanemethylene glycol.

**7.** Polyester different-contraction commingled yarn according to any one of claims 1 to 6, wherein the difference between the boiling water shrinkage ratios of the two filaments is 2% or greater.

**8.** Polyester different-contraction commingled yarn according to any one of claims 1 to 7, wherein both of the filaments are latent crimping conjugated filaments of two different polyester polymers conjugated in a side-by-side fashion or eccentric core-sheath fashion, the boiling water shrinkage ratio of one of the filaments is 0.5-8.0% and the boiling water shrinkage ratio of the other filaments is at least 10%.

**9.** Polyester different-contraction commingled yarn according to any one of claims 1 to 8, wherein the crimp ratio of the filaments with a high boiling water shrinkage ratio (high-shrinkage filaments) after boiling water treatment is at least 1.5%.

**10.** Polyester different-contraction commingled yarn according to any one of claims 1 to 9, wherein the single filament size of the high-shrinkage filaments are larger than that of the low-shrinkage filaments, the single filament size of the low-shrinkage filaments is 0.05-3.5 dtex, the single filament size of the high-shrinkage filaments is 0.55-15.0 dtex, and the difference in filament sizes is 0.5 dtex or greater.

**11.** Polyester different-contraction commingled yarn according to any one of claims 1 to 7, wherein the two different

types of filaments are a polyester partially oriented yarn with a boiling water shrinkage ratio of no greater than 5% and a polyester yarn with a boiling water shrinkage ratio of 8% or greater.

## Patentansprüche

1. Vermischtes Polyestergarn mit unterschiedlicher Kontraktion, umfassend zwei verschiedene Typen von Filamenten mit unterschiedlichen Siedewasser-Schrumpfungsverhältnissen, umfassend individuell Polyesterpolymer als Hauptkomponente, worin das Polyesterpolymer eines ist, das durch Polykondensation eines aromatischen Dicarboxylatesters in der Gegenwart eines Katalysators erzeugt ist; worin der Katalysator zumindest einen Bestandteil umfasst, ausgewählt aus der unten gezeigten Mischung (1) und Reaktionsprodukt (2),
worin die Mischung (1) eine Mischung aus den folgenden Komponenten (A) und (B) ist:

(A) eine Titanverbindungskomponente, umfassend zumindest eine Verbindung, ausgewählt aus der Gruppe bestehend aus:

(a) Titanalkoxiden, dargestellt durch die folgende allgemeine Formel (I):

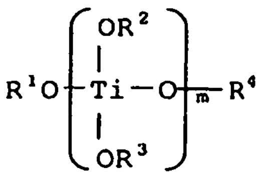

(I)

worin $R^1$, $R^2$, $R^3$ und $R^4$ jeweils unabhängig eine Spezies sind, ausgewählt aus Alkylgruppen mit 1 bis 20 Kohlenstoffatomen und Phenylgruppe, m eine ganze Zahl von 1 bis 4 ist, und wenn m eine ganze Zahl von 2, 3 oder 4 ist, die zwei, drei oder vier $R^2$- und $R^3$-Gruppen gleich oder verschieden sein können; und
(b) Reaktionsprodukten von Titanalkoxiden der obigen allgemeinen Formel (I) mit aromatischen polyvalenten Carbonsäuren, dargestellt durch die folgende allgemeine Formel (II):

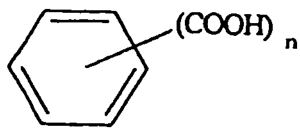

(II)

worin n eine ganze Zahl von 2 bis 4 ist; oder deren Anhydriden; und

(B) eine Phosphorverbindungskomponente, umfassend zumindest eine Verbindung, dargestellt durch die folgende allgemeine Formel (III):

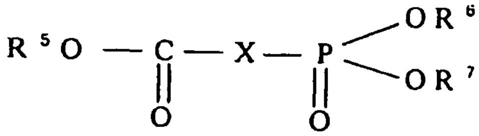

(III)

worin $R^5$, $R^6$ und $R^7$ jeweils unabhängig Alkylgruppen mit 1 bis 4 Kohlenstoffatomen sind und X zumindest eine Spezies ist, ausgewählt aus $-CH_2$-Gruppe und $-CH_2(Y)$-Gruppe (worin Y Phenylgruppe ist);
worin die Katalysatormischung (1) mit einem Mischungsverhältnis verwendet wird, so dass das Verhältnis (%) $M_{Ti}$ der Millimole des Titanelementes in der Titanverbindungskomponente (A) in Bezug auf die Zahl der Mole des aromatischen Dicarboxylatesters und das Verhältnis (%) Mp der Millimole des Phosphorelementes in der Phosphorverbindungskomponente (B) in Bezug auf die Zahl der Mole des aromatischen Dicarboxylatesters die

folgenden Ausdrücke (i) und (ii) erfüllen:

$$1 \leq M_P/M_{Ti} \leq 15 \qquad (i)$$

$$10 \leq M_P+M_{Ti} \leq 100 \qquad (ii)$$

und das Reaktionsprodukt (2) das Reaktionsprodukt der folgenden Komponenten (C) und (D) ist:
(C) eine Titanverbindungskomponente, umfassend zumindest eine Verbindung ausgewählt aus der Gruppe bestehend aus:

(c) Titanalkoxiden, dargestellt durch die obige Formel (I) und
(d) Reaktionsprodukten von Titanalkoxiden der obigen allgemeinen Formel (I) mit aromatischen polyvalenten Carbonsäuren, dargestellt durch die allgemeine Formel (II) oder deren Anhydriden; und

(D) eine Phosphorverbindungskomponente, umfassend zumindest eine Phosphorverbindung, dargestellt durch die folgende allgemeine Formel (IV):

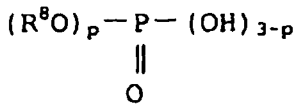

(IV)

worin $R^8$ eine Alkylgruppe mit 1 bis 20 Kohlenstoffatomen oder Arylgruppe mit 6 bis 20 Kohlenstoffatomen ist und p eine ganze Zahl von 1 ist,
und die Filamente mit einem niedrigen Siedewasser-Schrumpfungsverhältnis (gering schrumpfende Filamente) Filamente sind, die bei einer Aufnahmegeschwindigkeit von 2000 bis 4000 m/min beim Schmelzspinnen aufgenommen sind und einer Relaxationswärmebehandlung unterworfen sind.

**2.** Vermischtes Polyestergarn mit unterschiedlicher Kontraktion nach Anspruch 1, worin die Komponente (A) der Mischung (1) für den Katalysator und die Komponente (C) des Reaktionsproduktes (2) für den Katalysator das Titanalkoxid (a) beziehungsweise Titanalkoxid (c) jeweils in einem molaren Reaktionsverhältnis im Bereich von 2:1 bis 2:5 in Bezug auf die aromatische polyvalente Carbonsäure, dargestellt durch die allgemeine Formel (II) oder dessen Anhydrid umfasst.

**3.** Vermischtes Polyestergarn mit unterschiedlicher Kontraktion nach Anspruch 1 oder 2, worin im Reaktionsprodukt (2) für den Katalysator das Reaktionsverhältnis der Komponente (D) in Bezug auf die Komponente (C) im Bereich von 1:1 bis 3:1 liegt, ausgedrückt als Verhältnis der Mole der Phosphoratome in der Komponente (D) zu den Molen der Titanatome in der Komponente (C) (P/Ti).

**4.** Vermischtes Polyestergarn mit unterschiedlicher Kontraktion nach einem der Ansprüche 1 bis 3, worin die Phosphorverbindung der allgemeinen Formel (IV), die im Reaktionsprodukt (2) für den Katalysator verwendet wird, aus Monoalkylphosphaten ausgewählt ist.

**5.** Vermischtes Polyestergarn mit unterschiedlicher Kontraktion nach einem der Ansprüche 1 bis 4, worin der aromatische Dicarbonsäureester ein Diester ist, erzeugt durch Umesterung eines aromatischen Dicarbonsäuredialkylesters und eines Alkylenglycols in der Gegenwart eines Katalysators mit einer Titanverbindung.

**6.** Vermischtes Polyestergarn mit unterschiedlicher Kontraktion nach einem der Ansprüche 1 bis 5, worin die aromatische Dicarbonsäure ausgewählt ist aus Terephtalsäure, 1,2-Naphthalindicarbonsäure, Phthalsäure, Isophthalsäure, Diphenyldicarbonsäure und Diphenoxyethandicarbonsäure und das Alkylenglycol ausgewählt ist aus Ethylenglycol, Butylenglycol, Trimethylenglycol, Propylenglycol, Neopentylglycol, Hexanmethylenglycol und Dodecanmethylenglycol.

7. Vermischtes Polyestergarn mit unterschiedlicher Kontraktion nach einem der Ansprüche 1 bis 6, worin der Unterschied zwischen den Siedewasser-Schrumpfungsverhältnissen der beiden Filamente 2% oder mehr ist.

8. Vermischtes Polyestergarn mit unterschiedlicher Kontraktion nach einem der Ansprüche 1 bis 7, worin beide Filamente konjugierte latente Kräuselfilamente von zwei unterschiedlichen Polyesterpolymeren, die in Seitean-Seite-Art oder exzentrischer Kern-Hülle-Art konjugiert sind, wobei das Siedewasser-Schrumpfungsverhältnis von einem der Filamente 0,5 bis 8,0% und das Siedewasser-Schrumpfungsverhältnis der anderen Filamente zumindest 10% ist.

9. Vermischtes Polyestergarn mit unterschiedlicher Kontraktion nach einem der Ansprüche 1 bis 8, worin das Kräuselverhältnis der Filamente mit einem hohen Siedewasser-Schrumpfungsverhältnis (Hochschrumpfungsfilamente) nach der Siedewasserbehandlung zumindest 1,5% ist.

10. Vermischtes Polyestergarn mit unterschiedlicher Kontraktion nach einem der Ansprüche 1 bis 9, worin die Einzelfilamentgröße der Hochschrumpfungsfilamente größer ist als die der Niedrigschrumpfungsfilamente, wobei die Einzelfilamentgröße der Niedrigschrumpfungsfilamente 0,05 bis 3,5 dtex ist, die Einzelfilamentgröße der Hochschrumpfungsfilamente 0,55 bis 15,0 dtex und der Unterschied bei den Filamentgrößen 0,5 dtex oder mehr ist.

11. Vermischtes Polyestergarn mit unterschiedlicher Kontraktion nach einem der Ansprüche 1 bis 7, worin die beiden unterschiedlichen Typen an Filamenten ein teilweise orientiertes Polyestergarn mit einem Siedewasser-Schrumpfungsverhältnis von nicht mehr als 5% und ein Polyestergarn mit einem Siedewasser-Schrumpfungsverhältnis von 8% oder mehr ist.

**Revendications**

1. Fil d'un mélange de contractions différentes de polyester comprenant deux types différents de filaments ayant différents pourcentages de rétrécissement dans l'eau bouillante, comprenant individuellement un polymère de polyester en tant que composant principal,
le polymère de polyester est produit par polycondensation d'un ester dicarboxylate aromatique en présence d'un catalyseur,
le catalyseur comprend au moins un ingrédient choisi parmi un mélange (1) et un produit réactionnel (2) ci-dessous,
le mélange (1) est un mélange des composants (A) et (B) suivants :

(A) un composé à base de titane comprenant au moins un composé choisi dans le groupe constitué par :

(a) les alcoxydes de titane représentés par la formule générale (I) suivante :

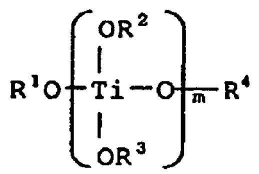

(I)

[dans laquelle $R^1$, $R^2$ $R^3$ et $R^4$ représentent chacun indépendamment une espèce choisie parmi les groupes alkyle ayant de 1 à 20 atomes de carbone et un groupe phényle, m représente un nombre entier valant de 1 à 4, et lorsque m est un nombre entier valant 2, 3 ou 4, les deux, trois ou quatre groupes $R^2$ et $R^3$ peuvent être identiques ou différents], et
(b) les produits réactionnels d'alcoxydes de titane de formule générale (I) ci-dessus et d'acides carboxyliques polyvalents aromatiques représentés par la formule générale (II) suivante :

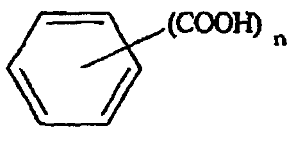

(II)

[dans laquelle n représente un nombre entier valant de 2 à 4],

ou leurs anhydrides, et
(B) un composé à base de phosphore comprenant au moins un composé représenté par la formule générale (III) suivante :

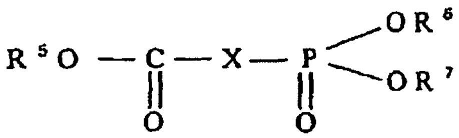

(III)

[dans laquelle $R^5$ $R^6$ et $R^7$ représentent chacun indépendamment des groupes alkyle ayant de 1 à 4 atomes de carbone et X représente au moins une espèce choisie parmi un groupe $-CH_2-$ et un groupe $-CH_2(Y)-$ (où Y représente un groupe phényle)],
le mélange catalytique (1) est utilisé avec un rapport de mélange tel que le rapport $M_{Ti}$ (%) des millimoles de l'élément titane dans le composé à base de titane (A) par rapport au nombre de moles de l'ester dicarboxylate aromatique et le rapport $M_p$ (%) des millimoles de l'élément phosphore dans le composé à base de phosphore (B) par rapport au nombre de moles de l'ester dicarboxylate aromatique satisfont les expressions (i) et (ii) suivantes :

$$1 \leq M_p/M_{Ti} \leq 15 \qquad (i)$$

$$10 \leq M_p+M_{Ti} \leq 100 \qquad (ii),$$

et le produit réactionnel (2) est le produit réactionnel des composants (C) et (D) suivants :
(C) un composant à base de titane comprenant au moins un composé choisi dans le groupe constitué par :

(c) les alcoxydes de titane représentés par la formule (I) ci-dessus, et
(d) les produits réactionnels d'alcoxydes de titane de formule générale (I) ci-dessus et d'acides carboxyliques polyvalents aromatiques représentés par la formule générale (II) ci-dessus ou leurs anhydrides, et

(D) un composé à base de phosphore comprenant au moins un composé à base de phosphore représenté par la formule générale (IV) suivante :

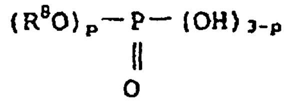

(IV)

dans laquelle $R^8$ représente un groupe alkyle ayant de 1 à 20 atomes de carbone ou un groupe aryle ayant de 6 à 20 atomes de carbone, et p représente un nombre entier valant 1,
et les filaments ayant un faible pourcentage de rétrécissement dans l'eau bouillante (filaments de faible rétrécissement) sont des filaments enroulés à une vitesse d'enroulement de 2000 à 4000 m/minute dans un filage par fusion et soumis à un traitement thermique de relaxation.

2. Fil d'un mélange de contractions différentes de polyester selon la revendication 1, dans lequel le composant (A) du mélange (1) pour le catalyseur et le composant (C) du produit réactionnel (2) pour le catalyseur contiennent l'alcoxyde de titane (a) et l'alcoxyde de titane (c) respectivement, chacun selon un rapport molaire réactionnel compris dans la plage allant de 2/1 à 2/5 par rapport à l'acide carboxylique polyvalent aromatique représenté par la formule générale (II) ou son anhydride.

3. Fil d'un mélange de contractions différentes de polyester selon la revendication 1 ou la revendication 2, dans lequel

dans le produit réactionnel (2) pour le catalyseur, le rapport réactionnel du composant (D) par rapport au composant (C) est compris dans la plage allant de 1/1 à 3/1, en termes de rapport des moles des atomes de phosphore dans le composant (D) aux moles d'atomes de titane dans le composant (C) (P/Ti).

**4.** Fil d'un mélange de contractions différentes de polyester selon l'une quelconque des revendications 1 à 3, dans lequel le composé à base de phosphore de formule générale (IV) utilisé dans le produit réactionnel (2) pour le catalyseur est choisi parmi les phosphates de monoalkyle.

**5.** Fil d'un mélange de contractions différentes de polyester selon l'une quelconque des revendications 1 à 4, dans lequel l'ester dicarboxylate aromatique est un diester produit par transestérification d'un ester dialkylique d'acide dicarboxylique aromatique et d'un alkylène glycol en présence d'un catalyseur contenant un composé à base de titane.

**6.** Fil d'un mélange de contractions différentes de polyester selon l'une quelconque des revendications 1 à 5, dans lequel l'acide dicarboxylique aromatique est choisi parmi l'acide téréphtalique, l'acide 1,2-naphtalènedicarboxylique, l'acide phtalique, l'acide isophtalique, l'acide diphényldicarboxylique et l'acide diphénoxyéthanedicarboxylique, et l'alkylène glycol est choisi parmi l'éthylène glycol, le butylène glycol, le triméthylène glycol, le propylène glycol, le néopentylglycol, l'hexaneméthylène glycol et le dodécaneméthylène glycol.

**7.** Fil d'un mélange de contractions différentes de polyester selon l'une quelconque des revendications 1 à 6, dans lequel la différence entre les pourcentages de rétrécissement dans l'eau bouillante des deux filaments est supérieure ou égale à 2 %.

**8.** Fil d'un mélange de contractions différentes de polyester selon l'une quelconque des revendications 1 à 7, dans lequel les deux filaments sont des filaments conjugués de frisure latente de deux polymères de polyester différents conjugués de manière côte-à-côte ou de manière gaine-noyau excentrique, le pourcentage de rétrécissement dans l'eau bouillante d'un des filaments est de 0,5 à 8,0 % et le pourcentage de rétrécissement dans l'eau bouillante de l'autre filament est d'au moins 10 %.

**9.** Fil d'un mélange de contractions différentes de polyester selon l'une quelconque des revendications 1 à 8, dans lequel le pourcentage de frisure dans les filaments ayant un pourcentage de rétrécissement dans l'eau bouillante élevé (filaments de fort rétrécissement) après un traitement dans de l'eau bouillante est d'au moins 1,5 %.

**10.** Fil d'un mélange de contractions différentes de polyester selon l'une quelconque des revendications 1 à 9, dans lequel la taille d'un filament unique des filaments de fort rétrécissement est plus grande que celle des filaments de faible rétrécissement, la taille d'un filament unique des filaments de faible étirement étant de 0,05 à 3,5 dtex, la taille d'un filament unique des filaments de fort rétrécissement étant de 0,55 à 15,0 dtex, et la différence de tailles de filaments étant supérieure ou égale à 0,5 dtex.

**11.** Fil d'un mélange de contractions différentes de polyester selon l'une quelconque des revendications 1 à 7, dans lequel les deux types différents de filaments sont un fil partiellement orienté de polyester ayant un pourcentage de rétrécissement dans l'eau bouillante de pas plus de 5 % et un film de polyester ayant un pourcentage de rétrécissement dans l'eau bouillante supérieur ou égal à 8 %.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5209366 A
- JP 59046258 A
- JP 58038722 A
- JP 7138354 A